# EUROPEAN PATENT APPLICATION

(11) **EP 3 282 221 A1**
(43) Date of publication of application: **14.02.2018**
(21) Application number: 16830289.1
(22) Date of filing: 11.07.2016
(51) Int. Cl.: G01B 11/14

(54) **GAP MEASURING DEVICE AND GAP MEASURING SYSTEM**

(30) Priority: 29.07.2015 JP 2015149778
(71) Applicant: Mitsubishi Heavy Industries, Ltd., Tokyo 108-8215 (JP)
(72) Inventor: SASANO, Yuichi, Tokyo 108-8215 (JP); YOSHITOMI, Kei, Tokyo 108-8215 (JP); GOTO, Takuya, Tokyo 108-8215 (JP)
(74) Representative: Henkel, Breuer & Partner
(86) International application number: PCT/JP2016/070427
(87) International publication number: WO 2017/018184

(57) **Abstract**

The objective of the present invention is to provide a gap measuring device and a gap measuring system with which it is possible for a gap between an upper member and a lower member which overlap one another in the form of a step to be measured accurately and easily. A gap measuring device 10 in an embodiment of the present invention is provided with: a translucent member 11 which is formed from a translucent material and has a first abutting surface 11A which abuts an upper surface 2A of a lower plate 2, and a second abutting surface 11B which is provided perpendicular to the first abutting surface 11A and abuts a side end surface 1A of an upper plate 1; an image-capturing unit 12 which captures an image of a gap, through the translucent member 11; and a gap measuring unit which measures the gap on the basis of image information relating to the gap of which an image has been captured. The translucent member 11 is provided, at an edge portion between the first abutting surface 11A and the second abutting surface 11B, with a mark 16 indicating the position of the edge portion.

## Description

### Technical Field

The present invention relates to a gap measuring device and a gap management system which measures a gap between an upper member and a lower member which are disposed to overlap each other in a form of a step.

### Background Art

In general, in industrial products such as machinery, various measurements are performed at the time of assembly so that abnormalities do not occur during operation, and for example, it is important to measure and manage a gap between members. As this type of technology for measuring a gap, in the related art, the following gap measuring device (for example, refer to PTL 1) is known. The gap measuring device includes a white light emitting diode which is provided on one end of a cylindrical body and of which an irradiation axis is orthogonal to an axis of the cylindrical body, a mirror which is provided on one end of the cylindrical body and bends an optical axis by 45°, a CCD camera which is provided at a base portion of the cylindrical body, and a color image processing unit which binarizes color image information acquired by the CCD camera, and the gap measuring device measures a gap between a valve seat press-fitted to a seat of an intake/exhaust port of an engine and the seat. In the gap measuring device, the gap is measured based on the image information acquired by the CCD camera, and thus, it is possible to measure the gap while preventing a contact between the gap measuring device and a member, and it is possible to prevent scratches from occurring on the surface of the member.

### Citation List

### Patent Literature

[PTL 1] Japanese Unexamined Patent Application Publication No. 2007-256162

### Summary of Invention

### Technical Problem

Meanwhile, in a structure as a skin panel constituting a fuselage or a wing of an aircraft in which an upper plate (upper member) is disposed to overlap a lower plate (lower member) in a form of a step, a position which is vertically lowered to an upper surface of the lower plate from a side end surface of the upper plate corresponds to a start point when a gap is measured. However, even in a case where image information is acquired by a camera, the position on the lower plate which becomes the start point of the gap cannot be specified by an image, and it is difficult to accurately measure the gap.

The present invention is made in consideration of the above-described circumstances, and an object thereof is to provide a gap measuring device and a gap management system capable of correctly and easily measuring a gap between an upper member and a lower member which are disposed to overlap each other in a form of a step.

### Solution to Problem

In order to solve the above-described problems and achieve the above-described object, there is provided a gap measuring device which measures a gap between an upper member and a lower member which are disposed to overlap each other in a form of a step, the device including: a translucent member which is formed of a translucent material and includes a first abutment surface which abuts on an upper surface of the lower member and a second abutment surface which is perpendicularly provided to the first abutment surface and abuts on a side end surface of the upper member; an imaging unit which images the gap via the translucent member; and a gap measurement unit which measures the gap based on image information of the imaged gap, in which the translucent member includes a mark indicating a position of an edge portion between the first abutment surface and the second abutment surface on the edge portion.

According to this configuration, in a case where the gap is imaged via the translucent member by the imaging unit, the position of the mark on the captured image overlaps a start point when the gap is measured. Therefore, it is possible to correctly and easily measure the gap between the upper member and the lower member which are disposed to overlap each other in the form of a step.

In this configuration, the translucent member may include a scale which is provided at a predetermined length interval from the edge portion in a height direction of the second abutment surface. According to this configuration, it is possible to simply measure an actual size of the gap from the size of the gap on the image by comparing the scale and the gap.

Moreover, the gap measuring device may further include a mirror portion which is disposed between the translucent member and the imaging unit, bends an optical axis of the imaging unit, and causes light to enter the translucent member. According to this configuration, it is possible to compactly dispose the translucent member and the imaging unit. For example, by disposing the mirror portion such that the optical axis is bent by 90°, the translucent member and the imaging unit can be configured to have a disposition structure which perpendicularly extends upward from the upper surface of the lower member. Accordingly, it is possible to dispose the translucent member and the imaging unit at a narrow portion and it is possible to correctly measure the gap even in the narrow portion.

Moreover, the gap measuring device may further include a contact detection unit which detects that the first abutment surface and the second abutment surface come into contact with the upper surface of the lower member and the side end surface of the upper member, respectively. According to this configuration, even in a case where the translucent member and the imaging unit are mounted on a movement mechanism, it is possible to easily determine whether or not the translucent member is positioned at a position suitable for the measurement. Therefore, it is possible to easily perform the measurement of the gap by a remote control.

Moreover, the gap measuring device may further include a storage unit which, in a state where the first abutment surface and the second abutment surface abut on the upper surface of the lower member and the side end surface of the upper member, respectively, moves at least the translucent member and the imaging unit along the side end surface of the upper member, continuously measures the gap, associates information on a size of the measured gap with position information of the gap, and stores the associated information. According to this configuration, it is possible to correctly and rapidly measure the gap between the upper member and the lower member which are disposed to overlap each other in the form of a step. In addition, the size of the measured gap is stored in the storage unit along with the position information of the gap. Accordingly, after all measurements end, it is possible to compress the upper member and the lower member such that the gap is within the reference value with respect to a portion in which the size of the measured gap is larger than a predetermined reference value.

In addition, the above-described gap measuring device may be provided, and the gap may be managed such that the size of the gap measured by the gap measuring device is within a predetermined reference value. According to this configuration, it is possible to correctly and easily manage the gap between the upper member and the lower member which are disposed to overlap each other in the form of a step.

### Advantageous Effects of Invention

According to the present invention, in a case where the gap is imaged via the translucent member by the imaging unit, the position of the mark on the captured image overlaps the start point when the gap is measured. Therefore, it is possible to correctly and easily measure the gap between the upper member and the lower member which are disposed to overlap each other in the form of a step.

### Brief Description of Drawings

Fig. 1 is a schematic configuration view showing a gap measuring device according to a first embodiment.
Fig. 2 is a side sectional view of an upper plate and a lower plate for explaining the gap measuring device and a gap.
Fig. 3 is a side sectional view of the upper plate and the lower plate showing the position of the gap measuring device when the gap is measured.
Fig. 4 is a front view showing a second abutment surface of a translucent member.
Fig. 5 is a schematic configuration view showing a gap measuring device according to a second embodiment.
Fig. 6 is a schematic configuration view of a device body of the gap measuring device.
Fig. 7 is a schematic configuration view showing a gap management system including a gap measuring device according to a third embodiment.
Fig. 8 is a schematic configuration view of a device body of the gap measuring device.
Fig. 9 is an external perspective view showing an optical unit and a lens fixing barrel.
Fig. 10 is a bottom view of the optical unit.

### Description of Embodiments

Hereinafter, embodiments according to the present invention will be described in detail with reference to the drawings. In addition, the present invention is not limited by the embodiments. Moreover, components in the embodiments include components easily replaced by a person skilled in the art or essentially the same components. In addition, the components described below can be appropriately combined, and moreover, in a case of a plurality of embodiments, it is possible to combine the embodiments.

### [First Embodiment]

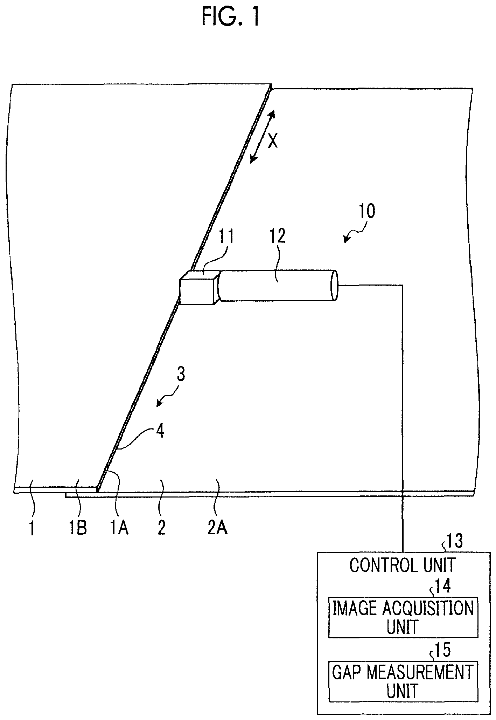

Fig. 1 is a schematic configuration view showing a gap measuring device according to a first embodiment. As shown in Fig. 1, a gap measuring device 10 measures a gap 4 between an upper plate (upper member) 1 and a lower plate (lower member) 2 which are disposed to overlap each other in a form of a step. For example, the upper plate 1 and the lower plate 2 are skin panels (outer plates) which form a cell structure of a fuselage of an aircraft and are formed in a long shape (several meters to ten meters) in a longitudinal direction (X direction in the drawings).

The cell structure is formed according to the following procedures (1) to (4). First, (1) the upper plate 1 and the lower plate 2 are disposed such that end portions of the upper plate 1 and the lower plate 2 overlap each other in a longitudinal direction. Accordingly, as shown in Fig. 1, the upper plate 1 and the lower plate 2 are disposed to overlap each other in the form of a step, and a step portion 3 is formed by an upper surface 2A of the lower plate 2 and a side end surface 1A and an upper surface 1B of the upper plate 1.

Next, (2) in the step portion 3, the gap 4 between the upper plate 1 and the lower plate 2 is measured in the longitudinal direction. In addition, (3) if all the measured gaps 4 are within a predetermined reference value (for example, 0.2 mm), the upper plate 1 and the lower plate 2 are fastened. Meanwhile, (4) if all the measured gaps 4 are not within the predetermined reference value (for example, 0.2 mm), a load is applied to the upper plate 1 and the lower plate 2 to compress (manage) the gap 4 such that the gap 4 of the portion is within the reference value. In addition, the procedure is returned to the procedure of (2), and if all the gaps 4 which are measured again are within the predetermined reference value (for example, 0.2 mm), the upper plate 1 and the lower plate 2 are fastened by the procedure of (3).

In a case where a cell structure of a fuselage is formed, it is necessary to reliably fasten the upper plate 1 and the lower plate 2 according to a predetermined reference. Accordingly, it is very important to measure and manage the gap 4 between the upper plate 1 and the lower plate 2. The gap measuring device 10 of the present embodiment appropriately measures the gap 4 between the upper plate 1 and the lower plate 2 which are disposed to overlap each other in the form of a step, and as shown in Fig. 1, the gap measuring device 10 includes a translucent member 11 which is formed of a material (for example, an acrylic resin) having light-transmitting properties, an imaging unit (for example, a fiberscope) 12 which images the gap 4 via the translucent member 11, and a control unit 13 which controls the operation of the entire gap measuring device 10. The translucent member 11 comes into contact with the upper plate 1 and the lower plate 2. Therefore, the translucent member 11 is formed of a soft material having a lower hardness than those of the upper plate 1 and the lower plate 2. Accordingly, in a case where the translucent member 11 comes into contact with the upper plate 1 and the lower plate 2, it is possible to prevent scratches from occurring on the surfaces of the upper plate 1 and the lower plate 2. The imaging unit 12 is disposed on a side opposite to the side end surface 1A (gap 4) of the upper plate 1 in a state where the translucent member 11 is interposed therebetween. The control unit 13 includes an image acquisition unit 14 which acquires image information of the gap 4 imaged by the imaging unit 12 and a gap measurement unit 15 which measures the size of the gap 4 based on the acquired image information.

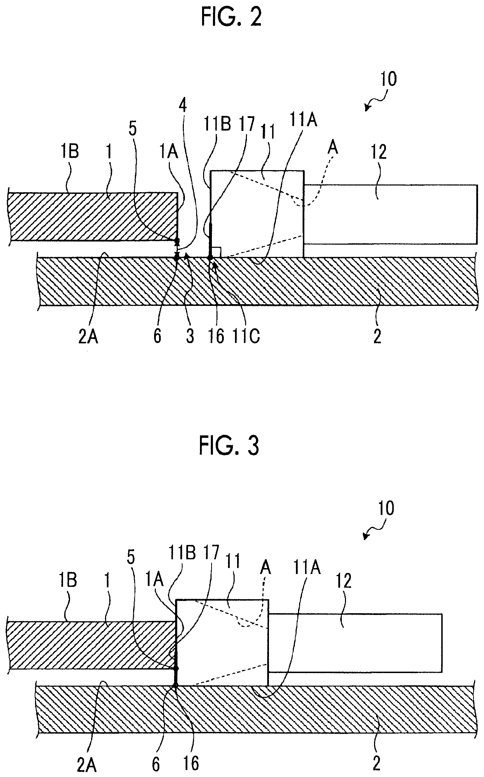

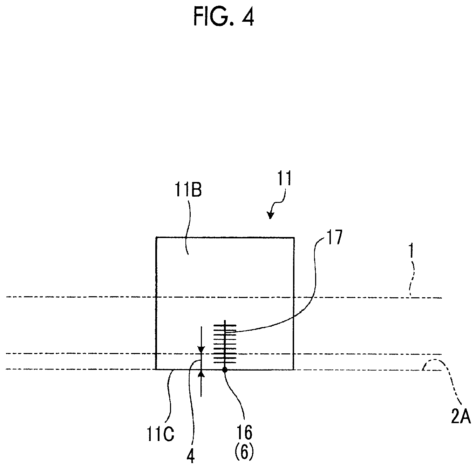

Fig. 2 is a side sectional view of the upper plate and the lower plate for explaining the gap measuring device and the gap, and Fig. 3 is a side sectional view of the upper plate and the lower plate showing the position of the gap measuring device when the gap is measured. In addition, Fig. 4 is a front view showing a second abutment surface of the translucent member. First, the gap 4 will be described. In the structure in which the upper plate 1 and the lower plate 2 are disposed to overlap each other in the form of a step, as shown in Fig. 2, a position of a point 6 which is vertically lowered to the upper surface 2A of the lower plate 2 from a lower end portion 5 of the side end surface 1A of the upper plate 1 corresponds to a start point when the gap 4 is measured. As described above, since it is very important to measure and manage the gap 4 between the upper plate 1 and the lower plate 2, preferably, it is correctly specify the position of the point 6 which becomes the start point of the gap 4. However, even when the imaging unit 12 is simply disposed to face the gap 4 to image the gap 4, it is preferable to correctly specify the position of the point 6 on the captured image, and it is difficult to correctly measure the gap 4.

The translucent member 11 has a function which indicates the position of the point 6 which becomes the above-described start point. Specifically, the translucent member 11 includes a first abutment surface 11A which abuts on the upper surface 2A of the lower plate 2 and a second abutment surface 11B which is provided perpendicularly to the first abutment surface 11A and abuts on the side end surface 1A of the upper plate 1. In general, considering a flow resistance of a skin panel, the side end surface 1A of the upper plate 1 is inclined downward from the upper surface 1B of the upper plate 1 toward the upper surface 2A of the lower plate 2. Accordingly, the second abutment surface 11B of the translucent member 11 abuts on at least the lower end portion 5 of the side end surface 1A. In addition, in Fig. 2, broken lines A shown in the translucent member 11 indicate a range of an imaging region of the imaging unit 12 and the range of the imaging region is set to be larger than the second abutment surface 11B of the translucent member 11.

The translucent member 11 includes a mark 16, which indicates the position of an edge portion 11C, on the edge portion 11C of the first abutment surface 11A and the second abutment surface 11B. The mark 16 is obtained by painting the edge portion 11C with a color (for example, black) reflecting light. The mark 16 may be configured such that a portion of the edge portion 11C is painted or may be configured such that the edge portion 11C and the first abutment surface 11A are painted. In this configuration, as shown in Fig. 3, in a case where the second abutment surface 11B of the translucent member 11 abuts on the side end surface 1A of the upper plate 1, the mark 16 provided on the edge portion 11C of the translucent member 11 overlap the above-described point 6. Accordingly, in a case where the imaging unit 12 images the gap 4 via the translucent member 11, the position of the mark 16 on the captured image is the above-described point 6. Therefore, it is possible to easily specify the start point of the gap 4.

In addition, the translucent member 11 includes a scale 17 on the second abutment surface 11B. The scale 17 extends in a height direction of the second abutment surface 11B from the mark 16 (edge portion 11C) and is set to be spaced apart by a predetermined length interval (for example, 0.1 mm). The scale 17 is a reference when the size of the gap 4 is measured, and the predetermined length interval is stored in a storage unit (not shown) of the control unit 13. It is possible to simply measure the actual size of the gap 4 from the size of the gap 4 on the image. The scale 17 is not necessarily provided as long as the size of the gap 4 can be measured. For example, the size of the gap 4 may be measured by providing an image obtained by imaging a position set to a predetermined reference length from the mark 16 (edge portion 11C) as a reference image and comparing the reference image and an image obtained by imaging the gap 4.

Next, a measurement procedure of the gap 4 will be described. First, the translucent member 11 and the imaging unit 12 are disposed at a predetermined measurement point. In this case, the first abutment surface 11A of the translucent member 11 abuts on the upper surface 2A of the lower plate 2 and the second abutment surface 11B abuts on the side end surface 1A of the upper plate 1. Next, in this state, the control unit 13 causes the imaging unit 12 to image the gap 4 and causes the image acquisition unit 14 to acquire image information imaged.

Next, the gap measurement unit 15 extracts the position of the point 6 becoming the start point of the gap 4 from the position of the mark 16 and the position of the lower end portion 5 of the side end surface 1A based on the acquired image information. As described above, the distance between the point 6 and the lower end portion 5 becomes the size of the gap 4. Next, the control unit 13 reads the length interval of the scale 17 and measures the size of the outer distance (gap 4) from the length interval and the distance between the point 6 and the lower end portion 5. For example, the information of the measured gap 4 is stored in an external storage device or the like.

Next, the above-described measurement processing of the gap 4 is repeatedly performed in the longitudinal direction of each of the upper plate 1 and the lower plate 2 while changing the measurement point. The number and the interval of the measurement points can be appropriately set. However, the shorter the interval is, the more accurately the measured information can be obtained.

### [Second Embodiment]

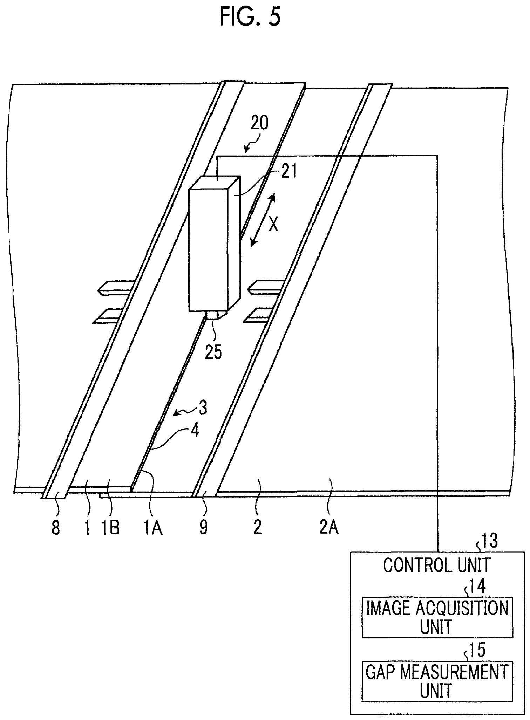

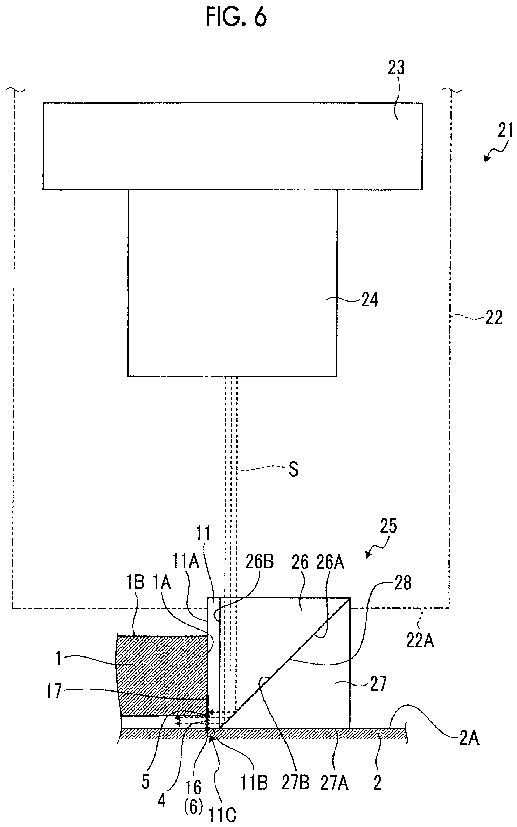

Next, a second embodiment will be described. Fig. 5 is a schematic configuration view showing a gap measuring device according to the second embodiment, and Fig. 6 is a schematic configuration view of a device body of the gap measuring device. In the second embodiment, the same reference numerals are assigned to the same components as those of the above-described first embodiment, and descriptions thereof are omitted. As shown in Fig. 5, frames 8 and 9 are respectively connected to the upper surface 1B of the upper plate 1 and the upper surface 2A of the lower plate 2, and the upper plate 1 and the lower plate 2 are supported by the frames 8 and 9. The frames 8 and 9 extend in the longitudinal direction (X direction in the drawings) of each of the upper plate 1 and the lower plate 2 and are provided at predetermined intervals. Accordingly, for example, it is assumed that a distance between the frames 8 and 9 decreases in the step portion 3 in which the upper plate 1 and the lower plate 2 overlap each other in the form of a step. In the narrow portion, unlike the gap measuring device 10 of the first embodiment, the translucent member 11 and the imaging unit 12 cannot be disposed side by side on the upper surface 2A of the lower plate 2, and it is not possible to correctly measure the gap 4. For example, a gap measuring device 20 according to the second embodiment correctly measures the gap 4 even in the narrow portion in which the frames 8 and 9 are provided.

The gap measuring device 20 includes a device body 21 and a control unit 13 which are disposed to stand on the upper surface 2A of the lower plate 2. As shown in Fig. 6, the device body 21 includes an angled tubular box body 22 which is vertically long, and an imaging unit (for example, a CCD image sensor, a CMOS image sensor, or the like) 23 and a magnifying lens (for example, a microscope lens, a macro lens, a de-centric lens, or the like) 24 for applying a magnified image to the imaging unit 23 are accommodated in the box body 22. In this configuration, an optical axis S of the imaging unit 23 extends in up and down directions of the box body 22, that is, extends perpendicularly to the upper surface of 2A of the lower plate 2. In the present embodiment, a CCD image sensor or a CMOS image sensor is used as the imaging unit 23 and the magnifying lens 24 such as a microscope lens, a macro lens, or a de-centric lens is provided. Accordingly, compared to a configuration in which a fiberscope is used, it is possible to capture an image with less distortion and measurement accuracy of the gap 4 is improved.

In addition, the device body 21 includes an optical unit 25 which is disposed on a bottom surface 22A of the box body 22. The optical unit 25 is integrally formed with the above-described translucent member 11, a prism mirror (mirror portion) 26, and a holding base 27. The prism mirror 26 is a triangular prism whose cross section is a right angled isosceles triangle, and a mirror surface 28 is formed on an inclined surface portion 26A. The prism mirror 26 is provided between the translucent member 11 and the imaging unit 23 and, for example, has a function which bends the optical axis S of the imaging unit 23 extending perpendicularly to the upper surface 2A of the lower plate 2 by 90° to reflect light to be parallel to the upper surface 2A of the lower plate 2 and causes the light to enter the translucent member 11. Moreover, in the present embodiment, the prism mirror 26 is formed in a triangular prism shape whose cross section is a right angled isosceles triangle and is configured to bend the optical axis S by 90°. However, the bending angle of the optical axis S is appropriately changed as long as light is reflected so as to be parallel to the upper surface 2A of the lower plate 2.

The holding base 27 is a jig which holds the prism mirror 26 at a predetermined angle position and is formed of a soft material (for example, a Teflon (registered mark) resin) having a lower hardness than those of the upper plate 1 and the lower plate 2. Therefore, in a case where the holding base 27 comes into contact with the upper surface 2A of the lower plate 2, it is possible to prevent scratches from occurring on the upper surface 2A. The holding base 27 includes an abutment surface 27A which abuts on the upper surface 2A of the lower plate 2 and an inclination holding surface 27B which faces the inclined surface portion 26A of the prism mirror 26 and holds the prism mirror 26, and the cross section of the holding base 27B is a right angled isosceles triangular shape. The inclination holding surface 27B is formed to have the same size as that of the inclined surface portion 26A of the prism mirror 26. Accordingly, if the prism mirror 26 is disposed on the inclination holding surface 27B, the lower end of the inclined surface portion 26A (mirror surface 28) of the prism mirror 26 corresponds to the height position of the upper surface 2A of the lower plate 2. Therefore, it is possible to image the gap 4 from the height position of the upper surface 2A of the lower plate 2 using the imaging unit 23, and it is possible to measure the gap 4 with high accuracy.

The translucent member 11 is attached to a front surface 26B of the prism mirror 26 facing the gap 4. Compared to the translucent member 11 of the first embodiment, the thickness of this translucent member 11 is thinner, and other configurations are the same as those of the translucent member 11 of the first embodiment. Moreover, in the present embodiment, the translucent member 11 is formed to be thinned in order to decrease the size of the optical unit 25. However, it is needless to say that the translucent member 11 may have the same thickness as that of the translucent member 11 of the first embodiment.

In the second embodiment, for example, the prism mirror 26 which bends the optical axis of the imaging unit 23 by 90° is provided between the translucent member 11 and the imaging unit 23 and the imaging unit 23 is disposed above the prism mirror 26. Accordingly, in the device body 21 of the gap measuring device 20, it is possible to realize the structure perpendicularly extending upward from the upper surface 2A of the lower plate 2. Therefore, for example, it is possible to correctly measure the gap 4 even in a narrow portion in which the frames 8 and 9 are provided.

### [Third Embodiment]

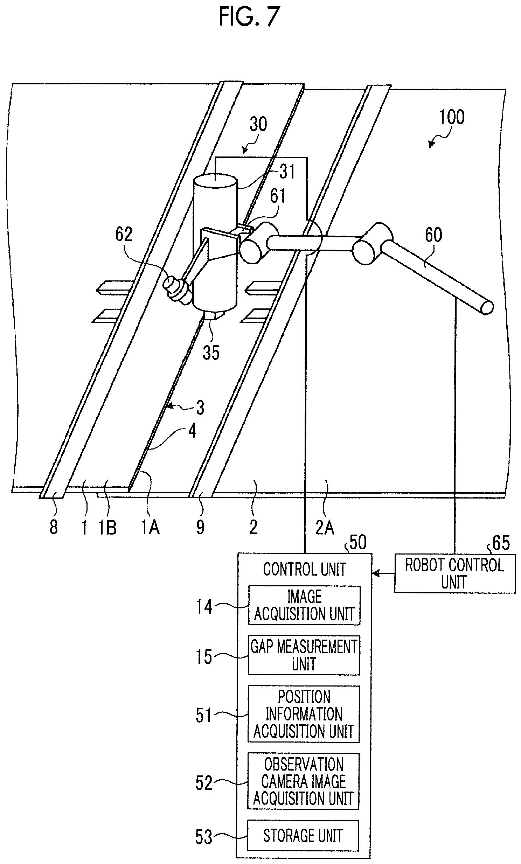

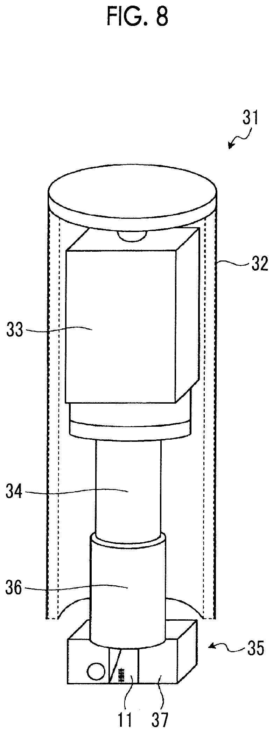

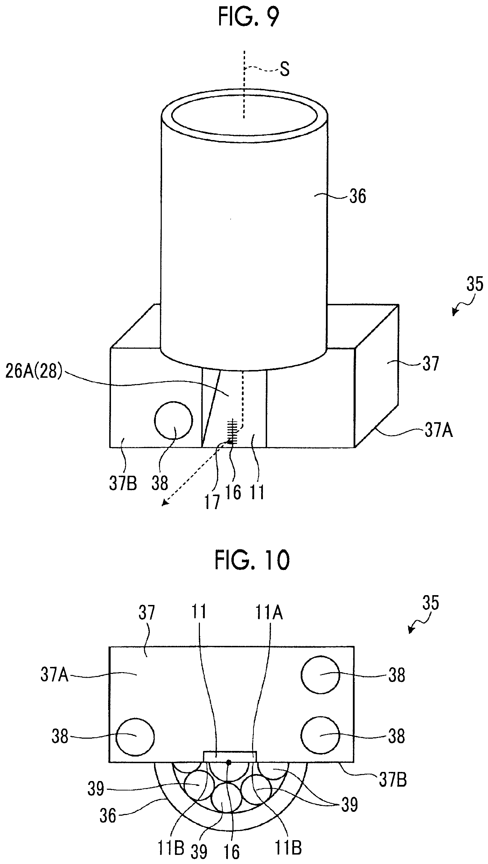

Next, a third embodiment will be described. Fig. 7 is a schematic configuration showing a gap management system including a gap measuring device according to the third embodiment, and Fig. 8 is a schematic configuration view of a device body of the gap measuring device. In addition, Fig. 9 is an external perspective view showing an optical unit and a lens fixing barrel and Fig. 10 is a bottom view of the optical unit. In the gap measuring device according to the third embodiment, the same reference numerals are assigned to the same components as those of the above-described first and second embodiments, and descriptions thereof are omitted.

As shown in Fig. 7, a gap management system 100 includes a gap measuring device 30 according to the third embodiment and manages a gap such that a measured gap is within a predetermined reference value. In addition, the gap management system may be configured to include the gap measuring devices 10 and 20 according to the first and second embodiments instead of the gap measuring device 30 according to the third embodiment. The gap measuring device 30 continuously measures the gap 4 using a movement mechanism such as a robot. As shown in Fig. 7, the gap measuring device 30 includes a device body 31 which is disposed to stand on the upper surface 2A of the lower plate 2. For example, the device body 31 is supported by a bracket 61 on the front end of a multi-axis articulated robot 60 (movement mechanism). The robot 60 is operated by the control of a robot control unit 65, for example, by the operation of an operator.

Moreover, the gap measuring device 30 includes an observation camera 62 which is supported by the bracket 61 and a control unit 50 which controls the operation of the entire gap measuring device 30. The observation camera 62 photographs the gap 4 measured by the device body 31 to monitor the measurement state of the gap 4. The image photographed by the observation camera 62 is output to the control unit 50 and is displayed on a display of an operator room where an operator is located. The operator remotely operates the robot while viewing the image displayed on the display.

The control unit 50 includes a position information acquisition unit 51, an observation camera image acquisition unit 52, and a storage unit 53 in addition to the above-described image acquisition unit 14 and gap measurement unit 15. The position information acquisition unit 51 acquires the position of the gap 4 when the gap 4 is measured, that is, position information (coordinate information) of the device body 31 in the upper plate 1 and the lower plate 2 from a robot control unit 65. The observation camera image acquisition unit 52 acquires the image information photographed by the observation camera 62. The storage unit 53 stores information on the size of the measured gap 4 in association with the position information of the gap 4 acquired by the position information acquisition unit 51. In this case, the storage unit 53 further stores the image information of the observation camera 62 in association with each other. Accordingly, it is possible to measure and manage the gap 4 with high accuracy in the process of forming the cell structure.

As shown in Fig. 8, the device body 31 includes a cylindrical box body 32 which is vertically long, and an imaging unit (for example, a CCD image sensor, a CMOS image sensor, or the like) 33, a magnifying lens (for example, a microscope lens, a macro lens, a de-centric lens, or the like) 34 for applying a magnified image to the imaging unit 33, and a lens fixing barrel 36 for fixing the magnifying lens 34 are accommodated in the box body 32. Also in this configuration, although not shown, the optical axis S of the imaging unit 33 extends in up and down directions of the box body 32, that is, extends perpendicularly to the upper surface 2A of the lower plate 2. In addition, the shape of the box body 32 may be other shapes such as an angled tubular shape as long as it can accommodate the imaging unit 33, the magnifying lens 34, and the lens fixing barrel 36.

Moreover, the device body 31 includes an optical unit 35 which is connected to the lens fixing barrel 36 and is disposed on the lower end portion of the box body 32. The optical unit 35 has the same configuration as that of the optical unit 25 described in the second embodiment and is integrally formed with the translucent member 11, the prism mirror (mirror portion) 26, and a holding base 37. The translucent member 11 and the prism mirror 26 are the same as those of the second embodiment. Therefore, descriptions thereof are omitted.

As shown in Fig. 9, the holding base 37 is formed in a rectangular parallelepiped shape and holds the prism mirror 26 and the translucent member 11 at the center of the front surface 37B of the holding base 37. As shown in Fig. 10, in the translucent member 11, the first abutment surface 11A is provided to be flush with a bottom surface 37A of the holding base 37 and the second abutment surface 11B is provided to be flush with a front surface 37B of the holding base 37. Accordingly, the bottom surface 37A of the holding base 37 abuts on the upper surface 2A of the lower plate 2 and the front surface 37B of the holding base 37 abuts on the side end surface 1A of the upper plate 1. Thereby, the first abutment surface 11A and the second abutment surface 11B of the translucent member 11 respectively abut on the upper surface 2A of the lower plate 2 and the side end surface 1A of the upper plate 1. Therefore, the mark 16 of the edge portion 11C (Fig. 6) between the first abutment surface 11A and the second abutment surface 11B of the translucent member 11 overlaps the position of the point 6 (Fig. 6) which becomes the start point when the gap 4 is measured, and thus, it is possible to accurately measure the gap 4.

In addition, as shown in Figs. 9 and 10, the holding base 37 includes touch sensors (contact detection units) 38 detecting a contact on the bottom surface 37A and the front surface 37B of the holding base 37. Preferably, three or more touch sensors 38 are provided on the right and left sides of the translucent member 11. In the present embodiment, two touch sensors 38 are provided on one side (right side) and one touch sensor 38 is provided on the other side (left side) on the bottom surface 37A of the holding base 37 in a state where the translucent member 11 is interposed therebetween. In addition, one touch sensor 38 is provided on the other side (left side) on the front surface 37B of the holding base 37 in a state where the translucent member 11 is interposed therebetween. Each of the touch sensors 38 can use any sensor as long as it can detect the contact between the sensor and the upper plate 1 or the lower plate 2, and for example, can use a capacitance type touch sensor or a pressure sensitive type touch sensor. The touch sensors 38 are connected to the control unit 50 and the control unit 50 permits the measurement of the gap 4 if all the touch sensors 38 sense the contact. In addition, an operator may be notified that the measurement is ready by turning on an indicator lamp or the like. Moreover, as shown in Fig. 10, irradiation lamps 39 which irradiate the front surface 37B side of the holding base 37, that is, the translucent member 11 side are provided inside the lens fixing barrel 36. For example, each of the irradiation lamps 39 is a LED lamp and provides an amount of light by which the imaging can be performed to the imaging unit 33.

Next, a procedure of a measurement operation of the gap 4 of the present embodiment will be described. The robot control unit 65 moves the device body 31 and the robot 60 along the gap 4 by the operation of an operator, and thus, the measurement is performed. First, the device body 31 is disposed at a predetermined measurement start position. This position is a predetermined position. In this state, the control unit 50 determines whether or not all the touch sensors 38 detect the contact, and in a case where the touch sensor 38 detects the contact, the control unit 50 permits the measurement start. Specifically, the control unit 50 turns on the indicator lamp provided in an operator room and receives a measurement start operation instruction.

The operator operates a measurement start button to start the measurement. In this case, the device body 31 and the robot 60 move along the gap 4 at a predetermined speed. According to this, the image acquisition unit 14 acquires the image information of the gap 4 imaged by the imaging unit 33 and measures the size of the gap 4 based on the image information. In the present embodiment, the position information acquisition unit 51 acquires the position information of the device body 31 when the gap is measured from the robot control unit 65, associates the information on the size of the measured gap 4 with the position information of the gap 4 (device body 31), and stores the associated information in the storage unit 53. This operation is continuously and repeatedly performed in the longitudinal directions of the upper plate 1 and the lower plate 2. Accordingly, it is possible to correctly and rapidly measure the gap 4 between the upper plate 1 and the lower plate 2 which are disposed to overlap each other in the form of a step. In addition, the size of the measured gap 4 is stored in the storage unit 53 along with the position information. Therefore, after all measurements end, the gap management system 100 applies a load to the upper plate 1 and the lower plate 2 with respect to a portion in which the size of the gap 4 is larger than a predetermined reference value. Thereby, it is possible to compress (manage) the upper plate 1 and the lower plate 2 such that the gap 4 is within the reference value.

Hereinbefore, the gap measuring devices 10, 20, and 30 of the embodiments include a translucent member 11 which is formed of a translucent material and includes the first abutment surface 11A which abuts on the upper surface 2A of the lower plate 2 and the second abutment surface 11B which is perpendicularly provided to the first abutment surface 11A and abuts on the side end surface 1A of the upper plate 1, the imaging units 12, 23, and 33 which image the gap 4 via the translucent member 11, and the gap measurement unit 15 which measures the gap 4 based on image information of the imaged gap 4, in which the translucent member 11 includes the mark 16 indicating the position of the edge portion 11C between the first abutment surface 11A and the second abutment surface 11B on the edge portion 11C. Accordingly, in a case where the gap 4 is imaged via the translucent member 11 by the imaging unit 12, the position of the mark 16 on the captured image overlaps the start point when the gap 4 is measured, and thus, it is possible to correctly and easily measure the gap 4 between the upper plate 1 and the lower plate 2 which are disposed to overlap each other in the form of a step.

In addition, according to the embodiments, the translucent member 11 includes the scale 17 which is provided at a predetermined length interval from the edge portion 11C in the height direction of the second abutment surface 11B. Therefore, by comparing the scale 17 and the gap 4, it is possible to simply measure the actual size of the gap 4 from the size of the gap 4 on the image.

In addition, according to the embodiments, the mirror portion 26 is provided, which is disposed between the translucent member 11 and the imaging units 23 and 33, bends optical axes S of the imaging units 23 and 33, and causes light to enter the translucent member 11. Therefore, it is possible to compactly dispose the translucent member 11 and the imaging units 23 and 33. For example, by disposing the mirror portion 26 such that the optical axis S is bent by 90°, the device bodies 21 and 31 of the gap measuring devices 20 and 30 can realize the structure which perpendicularly extends upward from the upper surface 2A of the lower plate 2. Accordingly, it is possible to correctly measure the gap 4 even in the narrow portion in which the frames 8 and 9 are provided.

In addition, according to the embodiments, the touch sensor 38 is provided, which detects that the first abutment surface 11A and the second abutment surface 11B come into contact with the upper surface 2A of the lower plate 2 and the side end surface 1A of the upper plate 1, respectively. Therefore, even in a case where the device body 31 for measuring the gap 4 is mounted on the robot 60, it is possible to determine whether or not the device body 31 is positioned at a position suitable for the measurement. Accordingly, it is possible to easily perform the measurement of the gap 4 by a remote control.

In addition, according to the embodiments, the storage unit 53 is provided, in a state where the first abutment surface 11A and the second abutment surface 11B abut on the upper surface 2A of the lower plate 2 and the side end surface 1A of the upper plate 1, respectively, the storage unit 53 moves the device body 31 along the side end surface 1A of the upper plate 1, continuously measures the gap 4, associates information on the size of the measured gap 4 with position information of the gap 4, and stores the associated information. Therefore, it is possible to correctly and rapidly measure the gap 4 between the upper plate 1 and the lower plate 2 which are disposed to overlap each other in the form of a step. In addition, the size of the measured gap 4 is stored in the storage unit 53 along with the position information. Accordingly, after all measurements end, it is possible to apply a load to the upper plate 1 and the lower plate 2 to compress the upper plate 1 and the lower plate 2 such that the gap 4 is within the reference value with respect to a portion in which the size of the gap 4 is larger than the predetermined reference value.

Hereinbefore, the embodiments of the present invention are described. However, the embodiments are presented as examples and are not intended to limit the scope of the invention. The embodiments can be implemented in various forms, and various omission, replacements, modifications can be made within a scope which does not depart from the gist of the present invention. The embodiments or modifications thereof are included in the inventions described in claims and the equivalent scope thereof as well as included in the scope or the gist of the present invention. In the above-described embodiments, the configuration is described which continuously measures the gap 4, associates the information on the size of the measured gap 4 with the position information of the gap 4, and stores the associated information in the storage unit 53. However, in addition to storing the information in the storage unit 53 or instead of this, with respect to a portion in which the size of the measured gap 4 exceeds the predetermined reference value, a marking indicating the position of the portion may be performed. In this configuration, an operator can visually determine the position of the gap 4 having a large size. Therefore, it is possible to easily perform an operation for compressing the gap 4.

### Reference Signs List

1: upper plate (upper member)
1A: side end surface
1B: upper surface
2: lower plate (lower member)
2A: upper surface
4: gap
6: point
8, 9: frame
10, 20, 30: gap measuring device
11: translucent member
11A: first abutment surface
11B: second abutment surface
11C: edge portion
12, 23, 33: imaging unit
13, 50: control unit
14: image acquisition unit
15: gap measurement unit
16: mark
17: scale
21, 31: device body
22, 32: box body
22A: bottom surface
24, 34: magnifying lens
25, 35: optical unit
26: prism mirror (mirror portion)
26A: inclined surface portion
26B: front surface
27, 37: holding base
27A: abutment surface
27B: inclination holding surface
28: mirror surface
36: lens fixing barrel
37A: bottom surface
37B: front surface
38: touch sensor (contact detection unit)
39: irradiation lamp
51: position information acquisition unit
52: observation camera image acquisition unit
53: storage unit
60: robot (movement mechanism)
61: bracket
62: observation camera
65: robot control unit
100: gap management system
S: optical axis

## Claims

1. A gap measuring device which measures a gap between an upper member and a lower member which are disposed to overlap each other in a form of a step, the device comprising:
a translucent member which is formed of a translucent material and includes a first abutment surface which abuts on an upper surface of the lower member and a second abutment surface which is perpendicularly provided to the first abutment surface and abuts on a side end surface of the upper member;
an imaging unit which images the gap via the translucent member; and
a gap measurement unit which measures the gap based on image information of the imaged gap,
wherein the translucent member includes a mark indicating a position of an edge portion between the first abutment surface and the second abutment surface on the edge portion.

2. The gap measuring device according to claim 1,
wherein the translucent member includes a scale which is provided at a predetermined length interval from the edge portion in a height direction of the second abutment surface.

3. The gap measuring device according to claim 1 or 2, further comprising:
a mirror portion which is disposed between the translucent member and the imaging unit, bends an optical axis of the imaging unit, and causes light to enter the translucent member.

4. The gap measuring device according to any one of claims 1 to 3, further comprising:
a contact detection unit which detects that the first abutment surface and the second abutment surface come into contact with the upper surface of the lower member and the side end surface of the upper member, respectively.

5. The gap measuring device according to any one of claims 1 to 4, further comprising:
a storage unit which, in a state where the first abutment surface and the second abutment surface abut on the upper surface of the lower member and the side end surface of the upper member, respectively, moves at least the translucent member and the imaging unit along the side end surface of the upper member, continuously measures the gap, associates information on a size of the measured gap with position information of the gap, and stores the associated information.

6. A gap management system comprising the gap measuring device according to any one of claims 1 to 5,
wherein the gap management system manages the gap such that the size of the gap measured by the gap measuring device is within a predetermined reference value.

## Amended claims

### Amended claims under Art. 19.1 PCT

**1.** (Amended) A gap measuring device which measures a gap between an upper member and a lower member which are disposed to overlap each other in a form of a step, the device comprising:
a translucent member which is formed of a translucent material and includes a first abutment surface which abuts on an upper surface of the lower member and a second abutment surface which is perpendicularly provided to the first abutment surface and abuts on at least a lower end portion of a side end surface of the upper member;
an imaging unit which images the gap via the translucent member; and
a gap measurement unit which measures the gap based on image information of the imaged gap,
wherein the translucent member includes a mark indicating a position of an edge portion between the first abutment surface and the second abutment surface on the edge portion, the mark overlapping the position of a point which is perpendicularly lowered to the upper surface of the lower member from the lower end portion of the side end surface of the upper member when the first abutment surface and the second abutment surface abut on the upper surface of the lower member and the lower end portion of the side end surface of the upper member, respectively.

**2.** The gap measuring device according to claim 1,
wherein the translucent member includes a scale which is provided at a predetermined length interval from the edge portion in a height direction of the second abutment surface.

**3.** The gap measuring device according to claim 1 or 2, further comprising:
a mirror portion which is disposed between the translucent member and the imaging unit, bends an optical axis of the imaging unit, and causes light to enter the translucent member.

**4.** The gap measuring device according to any one of claims 1 to 3, further comprising:
a contact detection unit which detects that the first abutment surface and the second abutment surface come into contact with the upper surface of the lower member and the side end surface of the upper member, respectively.

**5.** The gap measuring device according to any one of claims 1 to 4, further comprising:
a storage unit which, in a state where the first abutment surface and the second abutment surface abut on the upper surface of the lower member and the side end surface of the upper member, respectively, moves at least the translucent member and the imaging unit along the side end surface of the upper member, continuously measures the gap, associates information on a size of the measured gap with position information of the gap, and stores the associated information.

**6.** A gap management system comprising the gap measuring device according to any one of claims 1 to 5,
wherein the gap management system manages the gap such that the size of the gap measured by the gap measuring device is within a predetermined reference value.

Statement under Art. 19.1 PCT
Claim 1 is amended as "a gap measuring device which measures a gap between an upper member and a lower member which are disposed to overlap each other in a form of a step, the device comprising: a translucent member which is formed of a translucent material and includes a first abutment surface which abuts on an upper surface of the lower member and a second abutment surface which is perpendicularly provided to the first abutment surface and abuts on at least a lower end portion of a side end surface of the upper member; an imaging unit which images the gap via the translucent member; and a gap measurement unit which measures the gap based on image information of the imaged gap, wherein the translucent member includes a mark indicating a position of an edge portion between the first abutment surface and the second abutment surface on the edge portion, the mark overlapping the position of a point which is perpendicularly lowered to the upper surface of the lower member from the lower end portion of the side end surface of the upper member when the first abutment surface and the second abutment surface abut on the upper surface of the lower member and the lower end portion of the side end surface of the upper member, respectively".

In Patent Document 1, a plane expression of a lower plate is calculated from arbitrary three points of an image data measured at a predetermined time and a length of a perpendicular line lowered to the plane expression from the upper plate is measured to measure a gap. In this Patent Document 1, the plane expression is calculated one by one from the image data to measure the gap. Accordingly, a configuration for measuring the gap is complicated. Moreover, Patent Document 3 merely discloses a configuration in which a mark indicating the position of an end edge is provided at the end edge of a straight ruler as measurement stationery. Accordingly, even when Patent document 3 is combined with Patent Document 1, it is not possible to conceive a configuration which accurately measures the gap by accurately specifying the position perpendicularly lowered to the upper surface of the lower member from the side end surface of the upper member based on the mark.

Meanwhile, in the invention described in Claim 1, the mark provided on the edge portion of the translucent member not only simply indicates the edge portion but also has a function which "overlaps the position of the point which is perpendicularly lowered to the upper surface of the lower member from the lower end portion of the side end surface of the upper member when the first abutment surface and the second abutment surface abut on the upper surface of the lower member and the lower end portion of the side end surface of the upper member, respectively. Accordingly, in a case where the gap is imaged via the translucent member by the imaging unit, the position on the captured image indicated by the mark overlaps the point becoming a start point when the gap is measured. Therefore, effects capable of correctly and easily measuring the gap between the upper member and the lower member which are disposed to overlap each other in the form of a step are obtained.
